# EUROPÄISCHE PATENTANMELDUNG

(11) **EP 2 051 022 A2**
(43) Veröffentlichungstag der Anmeldung: **22.04.2009**
(21) Anmeldenummer: 08017959.1
(22) Anmeldetag: 14.10.2008
(51) Int. Cl.: F24J 2/16, F24J 2/18, F24J 2/54

(54) **Sonnenkollektor**

(30) Priorität: 19.10.2007 DE 102007050452
(71) Anmelder: PSE AG, 79110 Freiburg (DE)
(72) Erfinder: Häberle, Andreas Dr., 79111 Freiburg (DE); Zahler, Christian, 79106 Freiburg (DE); Scherer, Stephan, 79108 Freiburg (DE); Beer, Roland, 77960 Sulbach (DE); Luginsland, Frank, 79289 Horben (DE)
(74) Vertreter: Geitz Truckenmüller Lucht

(57) **Zusammenfassung**

Sonnenkollektor mit mehreren länglichen, gewölbten Primärspiegeln (1), welche nebeneinander parallel angeordnet sind, mit einem Primärspiegel-Antrieb zum Ausrichten der Primärspiegel (1) relativ zur Sonne, mit mindestens einem parallel zu den Primärspiegeln (1) ausgerichteten und oberhalb der Primärspiegel (1) angeordneten Absorberrohr (2) und mit mindestens einem gewölbten Sekundärspiegel (3) an der den Primärspiegeln (1) abgewandten Seite des Absorberrohrs (2). Die Primärspiegel (1) sind an ihrer Rückseite mit einer Primärspiegelhalterung ausgestattet. Die Primärspiegelhalterung umfasst auf die Rückseite der Primärspiegel (1) aufgeklebte Längsspanten (5) und auf die Längsspanten (5) aufgeklebte Querspanten (6).

## Beschreibung

### Stand der Technik

Die Erfindung geht aus von einem Sonnenkollektor nach dem Oberbegriff des Anspruchs 1, des Anspruchs 7 und des Anspruchs 12.

Derartige Sonnenkollektoren werden auch als Fresnel-Kollektoren bezeichnet. Sie bestehen im Wesentlichen aus mehreren länglichen Primärspiegeln, mindestens einem Absorberrohr und mindestens einem Sekundärspiegel. Die einfallende Sonnenstrahlung wird durch die Primärspiegel auf das Absorberrohr geleitet. Der gewölbte Sekundärspiegel sorgt dafür, dass die durch die Primärspiegel nicht direkt auf das Absorberrohr fokussierte Sonnenstrahlung über den Sekundärspiegel auf das Absorberrohr gelenkt wird. Hierzu ist der Sekundärspiegel derart am Absorberrohr angeordnet, dass seine Brennlinie innerhalb des Absorberrohrs verläuft. Da sich die Position der Sonne relativ zu einem ortsfest angeordnetem Sonnenkollektor ändert, werden die Primärspiegel mit Hilfe eines Primärspiegel-Antriebs nachgeführt.

Das Absorberrohr wird auch als Receiver bezeichnet. In dem Absorberrohr strömt ein Medium, das durch die auf das Absorberrohr fokussierte Sonnenstrahlung erwärmt wird. Die hohen Betriebstemperaturen des strömenden Mediums können je nach Dimensionierung des Sonnenkollektors, insbesondere seiner Höhe, seiner Länge und seiner Breite zur solarthermischen Stromerzeugung in Kraftwerken mit einer Leistung von 10 bis zu einigen hundert MW oder für industrielle Anwendungen als Prozesswärme im Temperaturbereich von ca. 200 °C bei einer thermischen Leistung ab etwa 50 kW genutzt werden. Während bei Kraftwerken eine Vielzahl derartiger Sonnenkollektoren nebeneinander zu einem Kraftwerksfeld angeordnet sind, werden die Sonnenkollektoren zur industriellen Anwendung aufgrund ihrer wesentlich kleineren Dimensionierung häufig auf dem Dach von Industriegebäuden aufgestellt. Da der Sonnenkollektor wenig Angriffsfläche für den Wind bietet und daher nur geringe Windlasten auszuhalten hat, kann er ohne Durchdringung der Dachhaut auf einen Gebäude aufgestellt werden.

Die Leistung des Sonnenkollektors hängt wesentlich von der Halterung und Führung der Primärspiegel ab. Der vorliegenden Erfindung liegt die Aufgabe zugrunde, einen Sonnenkollektor zur Verfügung zu stellen, bei dem die Primärspiegel in zuverlässiger Weise gehalten und geführt werden, mit dem eine möglichst hohe Leistung erzielt werden kann und der kostengünstig und effizient herzustellen ist.

### Die Erfindung und ihre Vorteile

Der erfindungsgemäße Sonnenkollektor mit den Merkmalen des Anspruchs 1 zeichnet sich dadurch aus, dass die Primärspiegel an ihrer Rückseite mit einer Primärspiegelhalterung ausgestattet sind, die im Wesentlichen aus Längsspanten und Querspanten besteht. Die Längsspanten sind dabei auf die Rückseite der Primärspiegel aufgeklebt. Die Querspanten, die vorteilhafter Weise die gewölbte Form der Primärspiegel vorgeben, sind auf die Längsspanten aufgeklebt. Die Primärspiegel bestehen in der Regel aus Glas und sind mit einer Metallbeschichtung versehen. Die Metallbeschichtung ist auf der dem Glas abgewandten Seite durch einen Spiegelschutzlack geschützt. Die Längs- und Querspanten der Primärspiegelhalterung bestehen aus einem von den Primärspiegeln abweichenden Material. Um eine hohe Stabilität der Primärspiegelhalterung zu garantieren, ist diese vorzugsweise aus Metall gefertigt. Bei dem Verbinden der Primärspiegel mit der Primärspiegelhalterung ist berücksichtigt, dass sich die Primärspiegel bei intensiver Sonneneinstrahlung erwärmen und dabei ausdehnen. Die Primärspiegelhalterung, welche aus einem anderen Material als die Primärspiegel besteht, dehnt sich aufgrund der Erwärmung durch Sonneneinstrahlung ebenfalls aus, jedoch unterscheidet sich die Wärmeausdehnung aufgrund der verschiedenen Wärmeausdehnungskoeffizienten der verschiedenen Materialien hinsichtlich ihrer Quantität. Die Klebeverbindung zwischen dem Primärspiegel und der Primärspiegelhalterung gleicht diese quantitativ unterschiedlichen Wärmeausdehnungen des Primärspiegels einerseits und der Primärspiegelhalterung andererseits aus.

Nach einer vorteilhaften Ausgestaltung der Erfindung besteht die Klebeverbindung zwischen dem Primärspiegel und den Längsspanten aus einem langsam aushärtenden ersten Klebstoff, der im ausgehärteten Zustand sehr elastisch ist, um der unterschiedlichen Wärmeausdehnung des Primärspiegels und der Längsspanten Rechnung zu tragen. Dadurch kann das Aufbrechen der Klebeverbindung bei einer Wärmeausdehnung von Primärspiegel und Längsspanten in Folge intensiver Sonneneinstrahlung vermieden werden.

Bei der Herstellung eines Sonnenkollektors werden vorteilhafter Weise zunächst die Längsspanten auf die noch ungewölbten Primärspiegel aufgeklebt.
Zum Aushärten des Klebstoffs der Klebeverbindung zwischen dem Primärspiegel und den Längsspanten können mehrere mit Längsspanten ausgestatteten Primärspiegel übereinander geschichtet werden. Eine spezielle Form oder eine spezielle Vorrichtung ist während des Aushärtens nicht notwendig. Die Dauer des Aushärtungsprozesses ist daher hinsichtlich der Effizienz der Herstellung des Sonnenkollektors unkritisch.

Nach einer weiteren vorteilhaften Ausgestaltung der Erfindung ist ein auf die Rückseite der Primärspiegel aufgebrachter Spiegelschutzlack gegenüber dem ersten Klebstoff inert. Der Spiegelschutzlack sowie die darunter befindliche Metallschicht und das Glas werden damit von dem ersten Klebstoff nicht angegriffen.

Nach einer weiteren vorteilhaften Ausgestaltung der Erfindung besteht die Klebeverbindung zwischen den Längsspanten und den Querspanten aus einem zweiten Klebstoff, der schneller aushärtet als der erste Klebstoff, und der im ausgehärteten Zustand eine geringere Elastizität aufweist als der erste Klebstoff. Vorteilhafter Weise geben die Querspanten aufgrund ihrer Krümmung die Wölbung der Primärspiegel vor. Es ist daher notwendig, den Primärspiegel zusammen mit den Längsspanten und den Querspanten während des Aushärtens des zweiten Klebstoffs durch eine spezielle Vorrichtung in der gekrümmten Position zu halten, um zu verhindern, dass sich die Längsspanten von den Querspanten lösen. Das Einspannen der Primärspiegel in spezielle Halterungen oder Formen während des Aushärtens des zweiten Klebstoffs beeinflusst die Dauer des Herstellungsprozesses des Sonnenkollektors, da die Vorrichtung oder die Halterung während des Aushärtens nur für einen Primärspiegel genutzt werden kann. Je kürzer die Dauer des Aushärtens des zweiten Klebstoffs ist, um so schneller läuft der Herstellungsprozess ab. Das schnelle Aushärten beschleunigt damit den Herstellungsprozess.

Da Längs- und Querspanten typischer Weise aus dem selben Material bestehen, weisen sie denselben Wärmeausdehnungskoeffizient und damit dieselbe quantitative Wärmeausdehnung auf. Der Ausgleich unterschiedlicher Wärmeausdehnungen zwischen den Längs- und Querspanten ist daher nicht notwendig. Da die Querspanten die Wölbung der Primärspiegel vorgeben, ist die geringe Elastizität des zweiten Klebstoffs von entscheidendem Vorteil, da sie zu einer Formstabilität der Primärspiegel führt.

Nach einer weiteren vorteilhaften Ausgestaltung der Erfindung sind die Querspanten an der den Längsspanten zugewandten Seite nach innen gewölbt. Alternativ dazu können die Querspanten an der den Längsspanten zugewandten Seite in zwei Abschnitte mit jeweils gradlinigem Verlauf unterteilt sein, wobei die beiden Abschnitte einen Winkel von weniger als 180° und mehr als 150° einschließen. Die Längsspanten sind dabei in ihrer Breite schmal gegenüber den Querspanten, so dass ein Querspant mehrere Längsspanten, insbesondere vier bis sechs Längsspanten, sowie einen Zwischenraum zwischen den Längsspanten abdeckt.

Der erfindungsgemäße Sonnenkollektor mit den Merkmalen des Anspruchs 7 zeichnet sich dadurch aus, dass mehrere Primärspiegel in Längsrichtung über ein zylindrisches Kupplungselement miteinander verbunden sind, welches in einem sphärischen Gleitlager beweglich gehalten und geführt ist. Das Kupplungselement und das sphärische Gleitlager ermöglichen eine einfache Montage der Primärspiegel und ein exaktes Ausrichten der Spiegel zueinander auch bei geringen Abweichungen hinsichtlich der Welle oder des Wellenstummels der Primärspiegel. Ferner können die Spiegel an ihren beiden Längsenden identisch aufgebaut sein, was die Flexibilität bei der Herstellung und der Montage erhöht.

Nach einer vorteilhaften Ausgestaltung der Erfindung umfasst das sphärische Gleitlager eine einen Hohlraum für das Kupplungselement aufweisende Lagerschale und eine die Lagerschale beweglich aufnehmende Lagerbuchse. Die Lagerbuchse ist dabei mit einem sphärischen Hohlraum für die Lagerschale ausgestattet. Lagerschale und Lagerbuchse bestehen beispielsweise aus Kunststoff. Ein derartiges Gleitlager ist wartungs- und verschleißarm, benötigt keine Schmierstoffe und ist unempfindlich gegen Verschmutzung.

Nach einer weiteren vorteilhaften Ausgestaltung der Erfindung besteht die Lagerschale aus zwei Hälften und die Lagerbuchse aus zwei Teilen. Dies erleichtert die Montage des Kupplungselementes und des Gleitlagers an den Primärspiegeln. Hierzu werden zunächst die beiden Wellen oder Wellenstummel der beteiligten Primärspiegel über das Kupplungselement miteinander verbunden, anschließend die beiden Hälften der Lagerschale um das Kupplungselement gelegt und abschließend die Lagerbuchse um die Lagerschale angeordnet. Vorteilhafter Weise ist die Lagerbuchse zumindest mit einem ihrer beiden Teile ortsfest angeordnet um eine hohe Stabilität zu garantieren.

Nach einer weiteren vorteilhaften Ausgestaltung der Erfindung weist das Kupplungselement in axialer Richtung mindestens einen zylindrischen Hohlraum zur Aufnahme der Wellen oder Wellenstummel zweier Primärspiegel auf. Dabei kann der zylindrische Hohlraum entweder das gesamte Kupplungselement durchdringen oder sich jeweils nur von den Stirnseiten ausgehend um einen vorgegebenen Abschnitt ins Innere erstrecken. Darüber hinaus ist das Kupplungselement vorteilhafter Weise geschlitzt und senkrecht zur axialen Richtung mit mindestens zwei Gewindebohrungen und zugehörigen Schrauben ausgestattet, um die Wellen oder Wellenstummel mit dem Kupplungselement zu verspannen. Diese Art der Verbindung hat den Vorteil, dass beim Spannen des Kupplungselementes kein Drehmoment in axialer Richtung auf die Wellen oder Wellenstummel der Primärspiegel einwirkt, welches zu einer Dejustierung bei der Montage führen könnte. Eine exakte Ausrichtung der Primärspiegel bei der Montage wird dadurch gewährleistet. Dabei ist dafür Sorge zu tragen, dass die in axialer Richtung nacheinander angeordneten Primärspiegel identisch ausgerichtet sind.

Der erfindungsgemäße Sonnenkollektor mit den Merkmalen des Anspruchs 12 zeichnet sich dadurch aus, dass die Primärspiegel an ihrer Rückseite mit einer Primärspiegelhalterung und einer Welle oder einem Wellenstummel zur Übertragung des Drehmoments des Primärspiegel-Antriebs ausgestattet sind.

Bei mehreren in axialer Richtung miteinander verbundenen Primärspiegeln ist an mindestens einer Welle oder einem Wellenstumpf eine Keilriemenscheibe angeordnet, welche über einen Keilriemen durch den Primärspiegel-Antrieb angetrieben wird. In die Keilriemenscheibe ist ein Hohlwellen-Drehgeber integriert um die Auslenkung des Primärspiegels zu erfassen. Der integrierte Hohlwellen-Drehgeber beansprucht keinen zusätzlichen Platz zwischen der Keilriemenscheibe und einem die Welle oder den Wellenstummel führenden Lager. Der entsprechende Platz steht damit für die Spiegelfläche der Primärspiegel zur Verfügung. Je größer die Spiegelfläche ist, um so größer ist auch die mit dem Sonnenkollektor zu erzeugende Leistung. Aufgrund des Platzgewinns kann der Primärspiegel entsprechend länger sein. Darüber hinaus ist das als Inkrementalgeber dienende Hohlwellen-Drehgeber durch die Keilriemenscheibe vor der Einwirkung äußerer Kräfte und der Witterung geschützt.

Nach einer vorteilhaften Ausgestaltung der Erfindung enthält der Hohlwellen-Drehgeber einen Hohlwellenpotentiometer. Dieses umfasst wie jedes Potentiometer einen stetig einstellbaren Spannungsteiler. Dieser ist mit einem Träger, auf dem ein Widerstandsmaterial aufgebracht ist, und mit einem als Schleifer bezeichneten Gleitkontakt ausgestattet, der den Gesamtwiderstand elektrisch in zwei Teilwiderstände zerlegt. Aus der am Spannungsteiler abgegriffenen Spannung kann daher auf die Stellung des Primärspiegels geschlossen werden. Dabei wird einer der beiden Teile des Hohlwellenpotentiometers fest mit der Welle oder der Keilriemenscheibe verbunden. Der andere Teil des Hohlwellenpotentiometers wird mit einem ortsfesten Bestandteil des Sonnenkollektors verbunden. Dabei kann es sich beispielsweise um ein die Welle oder den Wellenstummel führendes Lager handeln.

Weitere Vorteile und vorteilhafte Ausgestaltungen der Erfindung sind der nachfolgenden Beschreibung, der Zeichnung und den Ansprüchen zu entnehmen.

Zeichnung In der Zeichnung ist ein Ausführungsbeispiel des erfindungsgemäßen Sonnenkollektors dargestellt. Es zeigen:
- Figur 1: schematische Darstellung eines Sonnenkollektors,
- Figur 2: Primärspiegel mit Primärspiegelhalterung in einer Aufsicht auf die Stirnseite,
- Figur 3: Primärspiegel mit Primärspiegelhalterung in perspektivischer Darstellung von hinten,
- Figur 4: Kupplungselement für zwei Primärspiegel in perspektivischer Ansicht,
- Figur 5: Kupplungselement mit Gleitlager in perspektivischer Darstellung,
- Figur 6: Ausschnitt aus zwei Primärspiegeln mit Keilriemenscheibe, Hohlwellenpotentiometer, Kupplungselement und Gleitlager in einer Seitenansicht.

### Beschreibung des Ausführungsbeispiels

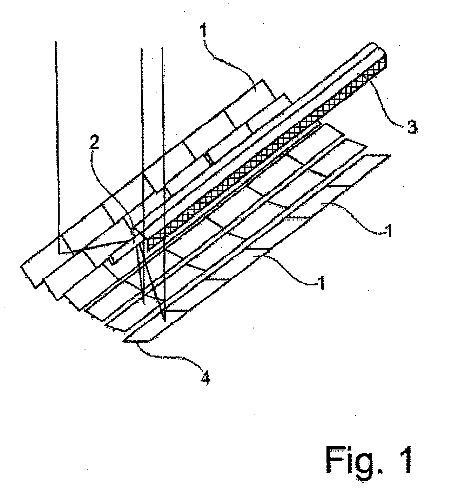

In Figur 1 ist ein als Fresnel-Kollektur bezeichneter Sonnenkollektor in perspektivischer Darstellung gezeigt. Mehrere Primärspiegel 1 reflektieren das einfallende Sonnenlicht in Richtung eines Absorberrohres 2. Das Absorberrohr 2 ist von einem Sekundärspiegel 3 umgeben, der verhindert, dass das von den Primärspiegeln 1 reflektierte Sonnenlicht nach oben abgestrahlt wird. Vielmehr wird das an dem Absorberrohr vorbei geführte Sonnenlicht durch den Sekundärspiegel auf das Absorberrohr 2 geleitet. Insgesamt sechs Primärspiegel 1 sind in axialer Richtung miteinander zu einer Primärspiegeleinheit verknüpft. Sie werden durch einen in Figur 1 nicht dargestellten Primärspiegel-Antrieb um eine Welle beziehungsweise einen Wellenstummel 4 gedreht. Bei dem in Figur 1 dargestellten Sonnenkollektor sind insgesamt sechs Primärspiegeleinheiten mit jeweils sechs Primärspiegeln dargestellt. Das Absorberrohr 2 verläuft oberhalb der Mitte der Primärspiegeleinheiten. Primärspiegel 1, Absorberrohr 2 und Sekundärspiegel 3 sind dabei parallel ausgerichtet. Die Einstellung des Winkels der sechs zu einer Primärspiegeleinheit in axialer Richtung zusammengefassten Primärspiegel hängt vom Sonnenstand und dem Abstand der Oberfläche der Primärspiegel 1 zum Absorberrohr 2 ab. Der in der Zeichnung nicht dargestellte Primärspiegel-Antrieb führt die Primärspiegel 1 nach, sobald der Sonnenstand sich ändert.

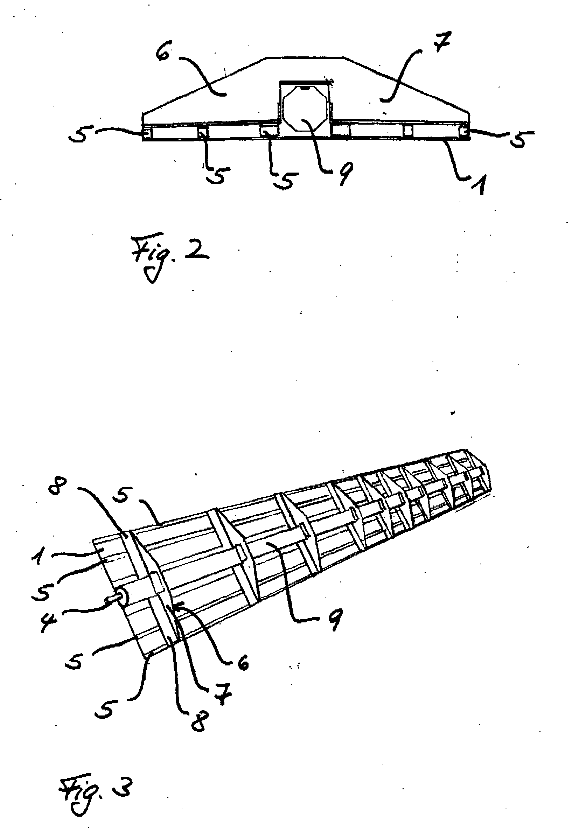

In Figur 2 und 3 ist eine Primärspiegelhalterung für die rechteckigen Primärspiegel 1 dargestellt. Die Primärspiegelhalterung weist Längsspanten 5 und Querspanten 6 auf. Die Längsspanten 5 verlaufen in Längsrichtung der Primärspiegel 1. Insgesamt sechs Längsspanten 5 sind mittels eines ersten Klebstoffs auf die Rückseite eines jeden Primärspiegels 1 aufgeklebt. Materialtoleranzen werden dabei durch die Stärke der Klebeschicht ausgeglichen. Der erste Klebstoff muss eine hohe Elastizität im ausgehärteten Zustand aufweisen und darf die Primärspiegel nicht angreifen. Die Längsspanten 5 haben einen rechteckigen Querschnitt. Auf die Längsspanten 5 sind die Querspanten 6 durch einen zweiten Klebstoff aufgeklebt. Der zweite Klebstoff muss eine verschwindend geringe Elastizität aufweisen und schnell aushärten. Da er nicht mit dem Primärspiegel in Berührung kommt, ist sein Verhalten gegenüber dem Primärspiegel irrelevant. Die Querspanten haben die Form eines Trapezes in der Seitenansicht gemäß Figur 2. Um die Klebefläche zwischen den Querspanten 6 und Längsspanten 5 zu vergrößern, weisen die Querspanten senkrecht zu dem in Figur 2 erkennbaren trapezförmigen Abschnitt 7 zwei rechteckige Abschnitte 8 auf, welche senkrecht zu dem trapezförmigen Abschnitt ausgerichtet sind, und welche parallel zu den Längsspanten 5 und dem Primärspiegel 1 ausgerichtet sind. In der Mitte weisen die Querspanten 6 eine rechteckige Ausnehmung auf, in welche ein Rohr 9 mit achteckigem Querschnitt aufgenommen ist. Das Rohr wird über eine in der Zeichnung nicht erkennbare Schraubverbindung mit an den Querspanten 6 angeordneten Laschen verbunden. Es dient zur mechanischen Versteifung der aus Längsspanten 5 und Querspanten 6 bestehenden Primärspiegelhalterung. Außerdem sind an den Stirnseiten des Rohres 9 Wellenstummel 4 befestigt, über die der Primärspiegel 1 drehbar gelagert und mit Hilfe des in der Zeichnung nicht dargestellten Primärspiegel-Antriebs relativ zur Sonne ausgerichtet wird.

Die beiden rechteckigen Abschnitte 8 der Querspanten 6 verlaufen unter einem Winkel gegeneinander, der nur wenig von 180 Grad abweicht. Dieser Winkel führt zu einer Wölbung des Primärspiegels 1. Da der Winkel klein ist, ist die Wölbung des Primärspiegels 1 in Figur 2 mit bloßem Auge nicht erkennbar.

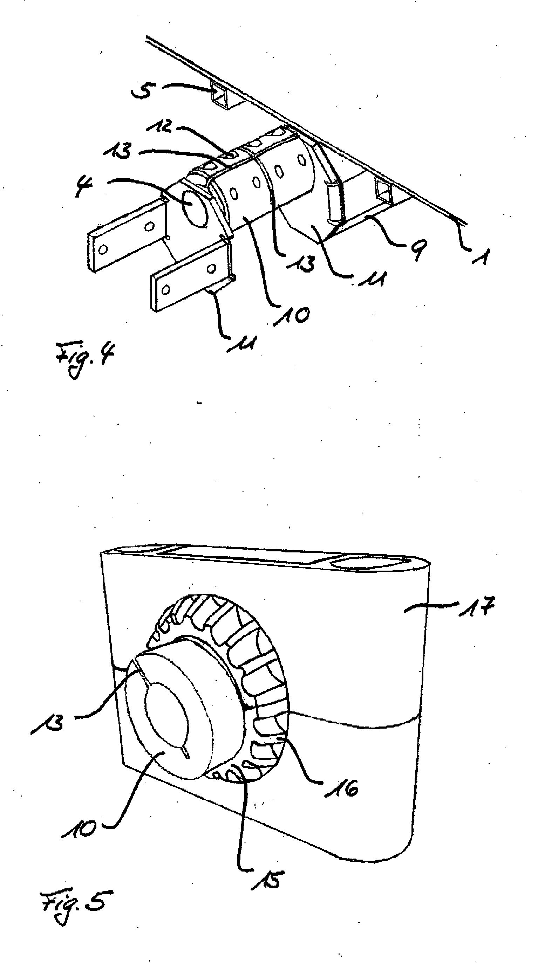

In Figur 4 ist ein Kupplungselement 10 zum Verbinden zweier Primärspiegel 1 dargestellt. An den beiden Stirnseiten der Rohre 9 ist ein die Öffnung des Rohres 9 verschließender Deckel 11 befestigt, an welchem der Wellenstummel 4 befestigt ist. Die beiden Wellenstummel 4 der miteinander zu verbindenden Primärspiegel 1 werden in einen zylindrischen Hohlraum des Kupplungselementes 10 eingeführt und über Schraubverbindungen 12 mit dem Kupplungselement 10 verspannt. Um mit den Schraubverbindungen 12 eine Klemmwirkung des Kupplungselementes 10 erzielen zu können, weist das Kupplungselement 10 in axialer und radialer Richtung Schlitze 13 auf. Die Schraubverbindungen 12 verlaufen dabei senkrecht zur axialen Richtung der Wellenstummel 4, der Primärspiegel 1 und der Rohre 9. Die beim Festspannen auf die beiden Wellenstummel 4 einwirkenden Kräfte führen daher nicht zu einer Dejustierung der zuvor justierten beiden Primärspiegel 1.

Figur 5 zeigt in perspektivischer Darstellung ein das Kupplungselement 10 umgebendes Gleitlager 14. Das Gleitlager besteht aus einer zweiteiligen Lagerschale 15, die einen zylindrischen Hohlraum für das Kupplungselement 10 und an der Außenseite mehrere Rippen 15 aufweist. Die Rippen spannen einen Teil einer Kugeloberfläche auf. Das Gleitlager 14 ist ferner mit einer Lagerbuchse 17 ausgestattet, welche einen sphärischen Hohlraum zur Aufnahme der Lagerschale 15 aufweist. Die Lagerschale 15 legt sich dabei wie eine Manschette um das Kupplungselement 10. Die beiden Teile der Lagerschale 15 werden durch die Lagerbuchse 17 zusammengedrückt und gegen das Kupplungselement 10 gepresst. Die aus Teflon bestehende Lagerschale 15 ist in der Lagerbuchse 17 beweglich gelagert. Das Kupplungselement 10 kann sich daher automatisch in dem Gleitlager ausrichten. Auch wenn die Wellenstummel 4 der beiden Primärspiegel 1 nicht exakt koaxial verlaufen, ist eine Kopplung der Wellenstummel 4 über das Kupplungselement und eine drehbare Lagerung des Kupplungselements in dem Gleitlager möglich. Das Kupplungselement wird in jeder beliebigen Ausrichtung drehbar geführt. Abweichungen werden ausgeglichen.

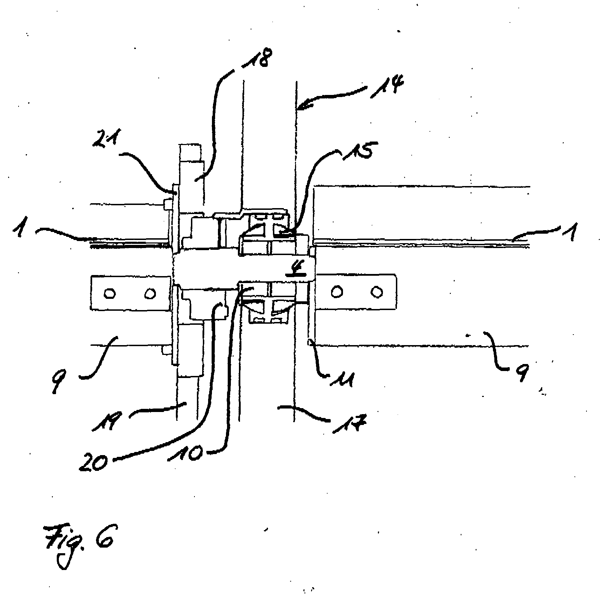

Figur 6 zeigt zwei über ein Kupplungselement 10 miteinander verbundene Primärspiegel mit einem Gleitlager 14, einer Keilriemenscheibe 18, einem Keilriemen 19 und einem in die Keilriemenscheibe 18 integrierten Hohlwellenpotentiometer 20. Der Keilriemen 19 verbindet die Keilriemenscheibe 18 mit einem in der Zeichnung nicht dargestellten Primärspiegel-Antrieb. Die Keilriemenscheibe 18 ist starr über Schrauben mit einer zusätzlichen Platte 21 verbunden, welche ihrerseits an dem Rohr 9 des linken Primärspiegels 1 befestigt ist. Die Rotationsbewegung der Keilriemenscheibe 18 wird damit auf den linken Primärspiegel 1 übertragen. Da dieser wiederum über das Kupplungselement 10 mit dem rechten Primärspiegel 1 verbunden ist, wird auch dieser durch die Keilriemenscheibe, den Keilriemen und den Primärspiegel-Antrieb gedreht. Das Hohlwellenpotentiometer 20 ist fest mit dem Wellenstummel 4 des linken Primärspiegels 1 verbunden. Ein zweiter Teil des Hohlwellenpotentiometers ist mit dem Gleitlager 14 verbunden. Eine Rotation des Wellenstummels 4 führt damit zu einer Auslenkung des Hohlwellenpotentiometers. Diese Auslenkung wird anhand eines in der Zeichnung nicht dargestellten Strom- oder Spannungsmessers festgestellt und als Drehwinkel angezeigt.

Sämtliche Merkmale der Erfindung können sowohl einzeln als auch in beliebiger Kombination miteinander erfindungswesentlich sein.

### Bezugszahlenliste

- 1: Primärspiegel
- 2: Absorberrohr
- 3: Sekundärspiegel
- 4: Wellenstummel
- 5: Längsspant
- 6: Querspant
- 7: trapezförmiger Abschnitt des Querspants
- 8: rechteckiger Abschnitt des Querspants
- 9: Rohr
- 10: Kupplungselement
- 11: Deckel
- 12: Schraubverbindung
- 13: Schlitz
- 14: Gleitlager
- 15: Lagerschale
- 16: Rippe der Lagerschale
- 17: Lagerbuchse
- 18: Keilriemenscheibe
- 19: Keilriemen
- 20: Hohlwellenpotentiometer
- 21: Platte

## Patentansprüche

1. Sonnenkollektor mit mehreren länglichen, gewölbten Primärspiegeln (1), welche nebeneinander parallel angeordnet sind, mit einem Primärspiegel-Antrieb zum Ausrichten der Primärspiegel (1) relativ zur Sonne, mit mindestens einem parallel zu den Primärspiegeln (1) ausgerichteten und oberhalb der Primärspiegel (1) angeordneten Absorberrohr (2), mit mindestens einem gewölbten Sekundärspiegel (3) an der den Primärspiegeln (1) abgewandten Seite des Absorberrohrs (2),
**dadurch gekennzeichnet,**
**dass** die Primärspiegel (1) an ihrer Rückseite mit einer Primärspiegelhalterung ausgestattet sind,
**dass** die Primärspiegelhalterung auf die Rückseite der Primärspiegel (1) aufgeklebte Längsspanten (5) und auf die Längsspanten (5) aufgeklebte Querspanten (6) umfasst.

2. Sonnenkollektor nach Anspruch 1, **dadurch gekennzeichnet, dass** die Klebeverbindung zwischen dem Primärspiegel (1) und den Längsspanten (5) aus einem ersten Klebstoff besteht, der im ausgehärteten Zustand eine hohe Elastizität aufweist, und dass ein auf die Rückseite der Primärspiegel (1) aufgebrachter Spiegelschutzlack gegenüber dem ersten Klebstoff inert ist.

3. Sonnenkollektor nach Anspruch 2, **dadurch gekennzeichnet, dass** die Klebeverbindung zwischen den Längsspanten (5) und den Querspanten (6) aus einem zweiten Klebstoff besteht, der schneller aushärtet als der erste Klebstoff und im ausgehärteten Zustand eine wesentlich geringere Elastizität aufweist als der erste Klebstoff.

4. Sonnenkollektor nach einem der vorhergehenden Ansprüche, **dadurch gekennzeichnet, dass** die Primärspiegel (1) aus metallbeschichtetem Glas bestehen und dass die Längs- und Querspanten (5, 6) aus Metall bestehen.

5. Sonnenkollektor nach einem der vorhergehenden Ansprüche, **dadurch gekennzeichnet, dass** die Querspanten (6) an der den Längsspanten (5) zugewandten Seite nach innen gewölbt sind.

6. Sonnenkollektor nach einem der Ansprüche 1 bis 4, **dadurch gekennzeichnet, dass** die Querspanten (6) an der den Längsspanten (5) zugewandten Seite in zwei Abschnitte mit jeweils geradlinigem Verlauf unterteilt sind, und dass die beiden Abschnitte einen Winkel von weniger als 180° und mehr als 150° einschließen.

7. Sonnenkollektor mit mehreren länglichen, gewölbten Primärspiegeln (1), welche nebeneinander parallel angeordnet sind, mit einem Primärspiegel-Antrieb zum Ausrichten der Primärspiegel (1) relativ zur Sonne, mit mindestens einem parallel zu den Primärspiegeln (1) ausgerichteten und oberhalb der Primärspiegel angeordneten Absorberrohr (2),
mit mindestens einem gewölbten Sekundärspiegel (3) an der den Primärspiegeln (1) abgewandten Seite des Absorberrohrs (2),
**dadurch gekennzeichnet,**
**dass** die Primärspiegel (1) an ihrer Rückseite mit einer Primärspiegelhalterung (5, 6) ausgestattet sind,
**dass** jede Primärspiegelhalterung mit einer Welle oder einem Wellenstummel (4) zur Übertragung des Drehmomentes des Primärspiegel-Antriebs auf den Primärspiegel (1) ausgestattet ist,
**dass** die Wellen oder Wellenstummel (4) je zweier Primärspiegel (1) in Längsrichtung über ein zylindrisches Kupplungselement (10) miteinander verbunden sind,
**dass** das Kupplungselement (10) in einem sphärischen Gleitlager (14) gehalten und geführt ist.

8. Sonnenkollektor nach Anspruch 7, **dadurch gekennzeichnet, dass** das sphärische Gleitlager (14) eine nach außen gewölbte, einen zylindrischen Hohlraum für das Kupplungselement (10) aufweisende Lagerschale (15) und eine die Lagerschale beweglich aufnehmende Lagerbuchse (17) umfasst, und dass die Lagerbuchse (17) einen sphärischen Hohlraum für die Lagerschale (15) aufweist.

9. Sonnekollektor nach Anspruch 8, **dadurch gekennzeichnet, dass** die Lagerschale (15) aus zwei Hälften besteht, und dass die Lagerbuchse (17) aus zwei Teilen besteht.

10. Sonnenkollektor nach Anspruch 7, 8 oder 9, **dadurch gekennzeichnet, dass** das Kupplungselement (10) aus Metall und das Gleitlager (14) aus Kunststoff besteht.

11. Sonnenkollektor nach einem der Ansprüche 7 bis 10, **dadurch gekennzeichnet, dass** das Kupplungselement (10) in axialer Richtung mindestens einen zylindrischen Hohlraum zur Aufnahme der Wellen oder Wellenstummel (4) zweier Primärspiegel (1) aufweist, dass das Kupplungselement (10) geschlitzt ist und senkrecht zur axialen Richtung mindestens zwei Gewindebohrungen (12) und zugehörige Schrauben aufweist um die Wellen oder Wellenstummel (4) mit dem Kupplungselement (10) zu verspannen.

12. Sonnenkollektor mit mehreren länglichen, gewölbten Primärspiegeln (1), welche nebeneinander parallel angeordnet sind, mit einem Primärspiegel-Antrieb zum Ausrichten der Primärspiegel (1) relativ zur Sonne, mit mindestens einem parallel zu den Primärspiegeln (1) ausgerichteten und oberhalb der Primärspiegel angeordneten Absorberrohr (2), mit mindestens einem gewölbten Sekundärspiegel (3) an der den Primärspiegeln (1) abgewandten Seite des Absorberrohrs (2),
**dadurch gekennzeichnet,**
**dass** die Primärspiegel (1) an ihrer Rückseite mit einer Primärspiegelhalterung (5, 6) ausgestattet sind, dass jede Primärspiegelhalterung (5, 6) mit einer Welle oder einem Wellenstummel (4) zur Übertragung des Drehmomentes des Primärspiegel-Antriebs auf den Primärspiegel (1) ausgestattet ist,
**dass** an mindestens einer Welle oder einem Wellenstumpf (4) eine Keilriemenscheibe (18) angeordnet ist, welche über einen Keilriemen (19)
durch den Primärspiegel-Antrieb angetrieben wird,
**dass** zwischen der Welle oder dem Wellenstummel (4) einerseits und der Keilriemenscheibe (18) andererseits ein Hohlwellen-Drehgeber (20) angeordnet ist um die Auslenkung des Primärspiegels (1) zu erfassen, und dass der Hohlwellen-Drehgeber (20) in die Keilriemenscheibe (18) integriert ist.

13. Sonnenkollektor nach Anspruch 12, **dadurch gekennzeichnet, dass** das der Hohlwellen-Drehgeber ein Hohlwellenpotentiometer (20) ist, dass das Hohlwellenpotentiometer (20) einen Träger und einen Schleifer aufweist, und dass entweder der Träger oder der Schleifer mit einem Teil des Sonnenkollektors verbunden ist, der nicht durch den Primärspiegel-Antrieb angetrieben wird.
